# EUROPÄISCHE PATENTSCHRIFT

(11) **EP 1 661 683 B1**
(45) Veröffentlichungstag und Bekanntmachung des Hinweises auf die Patenterteilung: **13.07.2011**
(21) Anmeldenummer: 06000562.6
(22) Anmeldetag: 08.03.2002
(51) Int. Cl.: B29C 43/34, B29C 31/04, B29C 43/52

(54) **Verfahren und Vorrichtung zum Pressformen von thermoplastischem Kunststoff**
Process and device for compression moulding plastics
Procédé et dispositif de moulage par compression de matière plastique

(30) Priorität: 19.03.2001 EP 01810274
(43) Veröffentlichungstag der Anmeldung: 31.05.2006
(62) Teilanmeldung aus: 02701142.8
(73) Patentinhaber: PackSys Global (Switzerland) Ltd., 3414 Oberburg (CH)
(72) Erfinder: Fankhauser, Urs, 3414 Oberburg (CH)
(74) Vertreter: Rüfenacht, Philipp Michael

(56) Entgegenhaltungen:
- EP-A- 0 328 096
- EP-B- 0 728 064
- US-A- 3 795 473
- US-A- 5 863 571
- PATENT ABSTRACTS OF JAPAN Bd. 2000, Nr. 13, 5. Februar 2001 (2001-02-05) & JP 2000 280248 A (TSUTSUMI YOTARO), 10. Oktober 2000 (2000-10-10)
- PATENT ABSTRACTS OF JAPAN Bd. 1997, Nr. 05, 30. Mai 1997 (1997-05-30) & JP 09 012734 A (AKEBONO BRAKE IND CO LTD), 14. Januar 1997 (1997-01-14)

## Beschreibung

### Technisches Gebiet

Die Erfindung betrifft ein Verfahren zum Ausformen von thermoplastischem Kunststoff zwischen zwei Formpresselementen und eine Vorrichtung dazu.

### Stand der Technik

Formpressen ist ein seit langem bekanntes Mittel, insbesondere Gegenstände aus einem thermoplastischen Material herzustellen. Beispielsweise werden Verschlüsse für Nahrungsmittel-Verpackungen hergestellt, insbesondere Kunststoffverschlüsse für Getränkeflaschen.

Damit der vorzugsweise thermoplastische Kunststoff verarbeitet werden kann, wird das Rohgranulat extrudiert und die gewünschte Menge abgeschnitten, welche auf ein Teil eines Formpresswerkzeugs deponiert wird. Anschliessend dringt ein zweites Formpresswerkzeug in das erste Formpresswerkzeug derart ein, dass das gewünschte Produkt geformt wird.

Aus der EP 0 328 096 A ist eine Vorrichtung zum Herstellen eines Tubenkopfes aus thermoplastischem Kunststoff bekannt. Aus einer Düse wird in einem Extruder erwärmtes thermoplastisches Kunststoffmaterial als ringförmiger Rohling ausgegeben. Axial zur Düse ist eine Formmatrize angeordnet, deren innere Form der Aussenform des herzustellenden Tubenkopfs entspricht. Zentral und axial ist zwischen zwei Anschlägen verschiebbar in der Formmatrize ein Zwischenträger angeordnet. In der durch den oberen Anschlag begrenzten Endstellung wird der Rohling direkt auf der Oberfläche des Zwischenträgers abgelegt. Der Zwischenträger hat einen koaxial ausfahrbaren Stab, welcher über die Oberfläche herausragt und einerseits den Rohling mit ringförmigem Querschnitt zentriert und andererseits die Ausgabeöffnung für den Tubenkopf beim Pressen frei hält.

Die EP 0 728 064 B zeigt ein Verfahren zum Anformen eines aus Kunststoff bestehenden Tubenkopfes an ein Tubenrohr. Der linsenförmige Rohling wird auf dem Hilfsträger deponiert. Ein Formstift ist auf dem Hilfsträger mittig angeordnet und im Hilfsträger und in der Hilfsträgerstange beim Formgebungsvorgang verschiebbar gegen axialen Federdruck. Die Form umfasst einen formgebenden Teil, der von einem Teil der Stirnfläche des Hilfsträgers, der inneren Kontur, der Formbacken und dem Schulterformraum gebildet wird. Eine Ausnehmung in einem für die Führung des Hilfsträgers mit der Hilfsträgerstange dienenden Einsatz ist derart ausgebildet, dass der Hilfsträger in der untersten Stellung aufgenommen werden kann und dann die Stirnfläche den Formboden bildet.

Die US 3,795,473 (FA Automatisierungsanlagenprojektierungs & Bauges.) beschreibt eine Maschine zur Herstellung von Bremsschuhen und Bremsbelägen. Diese umfasst eine Mehrzahl von Heisspressen auf einem ersten Drehtisch sowie zusätzliche Baugruppen zum Zuführen von vorgeformten Pellets zu den Heisspressen. Auf einem zweiten Drehtisch können eine Presse zum Herstellen der Pellets und daran angrenzend eine Dosiereinrichtung für die Bremsbelagszusammensetzung angeordnet sein. Die hergestellten Pellets werden mittels einer schwenkbaren Zange vom zweiten Drehtisch zu den Heisspressen auf dem ersten Drehtisch transportiert. Die Heisspressen umfassen einen Hauptzylinder, einen Pilotzylinder sowie mehrere Heizplatten und Formelemente. Nach dem Einlegen eines Pellets wird die entsprechende Presse mit dem Drehtisch um eine Position weitergedreht, so dass die nächste Presse an der Übergabestelle positioniert wird.

Die US 5,863,571 (Sidel) betrifft eine Maschine zur Herstellung von Behältern, wie z. B. Flaschen oder Töpfen, durch Wärmebehandlung und Blasformen von Kunststoff-Preforms. Die Maschine umfasst mindestens zwei auf einem Drehtisch angeordnete Formwerkzeuge. Jedes Formwerkzeug umfasst mindestens zwei Kavitäten und ermöglicht somit die Fertigung der doppelten Anzahl kleiner Behälter auf einer Maschine, die für die Herstellung grösserer Behälter ausgelegt ist. Zum Anpassen der Kadenz der zugeführten Preforms sind im Weiteren Einrichtungen zur Kadenzanpassung vorgesehen. Zur Zuführung der Preforms in die Kavitäten der Formwerkzeuge dienen Transferelemente, welche einen Arm mit einer Halteeinrichtung mit Klemmen umfassen. Der Arm ist um eine Schwenkachse drehbar. Entsprechende Vorrichtungen sind auch zum Entfernen der blasgeformten Behälter durch eine weitere Vorrichtung vorgesehen.

Bei den bisher bekannten Verfahren tritt oft eine unkontrollierte Oberflächenstruktur auf, welche insbesondere materialtechnisch und ästhetisch unerwünscht ist. Vor allem bei Verschlüssen von Nahrungsmittelbehältern ist neben den funktionellen Eigenschaften die Ästhetik von wesentlicher Bedeutung.

### Darstellung der Erfindung

Aufgabe der Erfindung ist es, ein Verfahren und eine konstruktiv einfache Vorrichtung zu schaffen, welche die Herstellung von Verschlüssen erlauben, insbesondere aus einer extrudierten Kunststoff-Rohmasse, ohne dass eine unkontrollierte Oberflächenstruktur an den Verschlüssen auftritt.

Die Lösung der Aufgabe ist durch die Merkmale des Anspruchs 1 definiert. Gemäss der Erfindung wird bei einem Verfahren zum Ausformen von thermoplastischem Kunststoff zwischen einem ersten und einem zweiten Formpresselement eine Portion Rohmasse auf einem Halter geringer Auflagefläche deponiert. Die Rohmasse auf der Auflagefläche weist einen Abstand zum einen Formpresselement auf und wird erst unmittelbar vor dem, beziehungsweise zu Beginn des Pressens an die Formpresselemente abgegeben. Der Halter ist zangenförmig ausgebildet und an einer Seitenwand eines der Formpresselemente angeordnet.

Die extrudierte Portion des Kunststoffs - auch Pellet genannt - weist eine Temperatur von etwa 180° Celsius auf. Die Formpresselemente haben dagegen eine um etwa 120° bis 150° niedrigere Betriebstemperatur. Im Rahmen der Erfindung wurde nun erkannt, dass der Zeitraum zwischen dem Deponieren der Portion und dem Ausformen kritisch für das Entstehen von unerwünschten Oberflächenveränderungen ist. Der zangenförmige Halter weist eine geringe Auflagefläche auf. Durch dessen Einsatz kann deshalb der flächige Kontakt vor dem Formen so kurz wie möglich gehalten werden, so dass "Verglasungseffekte" der Oberfläche vermieden werden können.

Wenn die Portion der extrudierten Kunststoffmasse auf dem ersten Formpresselement deponiert wird, liegt sie bei dem erfindungsgemässen Verfahren nicht vollständig auf diesem auf, sondern nur auf der geringen Auflagefläche des Halters. Dadurch, dass die Kontaktfläche zwischen dem Halter und dem Pellet so klein wie möglich gehalten wird, ist eine zu starke Abkühlung, insbesondere eine starke partielle Abkühlung, der extrudierten Kunststoff-Rohmasse vor dem Formpressvorgang nicht möglich. Der "Kälteschock" an der Kontaktfläche zum Halter ist derart klein, dass die beim Stand der Technik vorhandenen Auswirkungen weitgehend vermieden werden. Erst unmittelbar vor beziehungsweise zu Beginn des Pressens erfolgt der Kontakt des Pellets mit den Formpresselementen.

Vor oder während dem Formpressvorgang öffnen sich die Zangenteile und das Pellet fällt, vorzugsweise genau positioniert auf eines der Formpresselemente. Sobald das Pellet den Halter verlassen hat, wird der Halter ganz zurückgezogen oder zur Seite derart weggeschwenkt, dass das andere Formpresselement in das eine Formpresselement eindringen kann. Vorzugsweise ragt der zangenförmige Halter von der Seite her in das erste Formpresselement hinein.

Der Halter kann auch aus mehreren Teilen bestehen, welche am Umfang des Formpresselements angeordnet sind.

Es ist vorteilhaft, wenn das Pellet durch den Halter zentriert wird. Die Zentrierung des Pellets erfolgt einerseits durch eine annähernd genaue Deponierung des Pellets auf dem Halter und anderseits durch die Ausgestaltung der Auflagefläche des Halters. Eine gleichmässige Verteilung der Masse wirkt sich in der Regel auf die Qualität der Produktion aus. Bei asymmetrischen Pressformen ist die Zentrierung hinfällig, es sei denn, es wird eine ganz bestimmte (zentrische oder exzentrische) Position angestrebt.

Die erfindungsgemässe Vorrichtung umfasst ein erstes Formpresselement mit einem Halter und ein zweites Formpresselement, welches in das erste Formpresselement derart eindringt, dass ein Pellet - eine Portion extrudierte, thermoplastische Kunststoffmasse - zwischen diesen beiden Formpresselementen formgepresst wird. Der Halter weist eine geringe Auflagefläche für das Pellet auf und stützt dieses ab, bevor es mit dem ersten Formpresselement in Kontakt kommt.

Je nach Konsistenz des Pellets muss die Auflagefläche entsprechend ausgebildet sein. Wenn das Pellet eine Konsistenz aufweist, welche das Pellet kaum fliessen lässt, kann die Auflagefläche kleiner ausgebildet werden, als wenn das Pellet eher zum Fliessen neigt.

Auf den Arbeitsablauf bezogen, ist ein zeitlich gesteuertes Bewegen des Halters bevorzugt. Eine solche Steuerung wird auf den Arbeitstakt der gesamten Herstellungsvorrichtung abgestimmt. Vorzugsweise senkt sich der Halter, sobald das zweite Formpresselement in das erste Formpresselement eindringt. Als Art der Steuerung bieten sich die bekannten Systeme an. Wenn die Steuerung des Halters kurvengesteuert erfolgt, wird der Halter über einen Mechanismus hin- und herbewegt, welcher entlang einer vorzugsweise gekrümmten Schiene beziehungsweise entlang einer vorbestimmten Kurvenbahn verläuft. Das zweite Formpresselement wird in einem solchen Fall vorzugsweise auch kurvengesteuert. Dabei können die beiden Steuerungen auch zu einer Steuerung zusammengefasst werden. Aus unterhaltstechnischen Gründen sind jedoch zwei aufeinander abgestimmte, jedoch mechanisch weitgehend unabhängige Steuerungen für den Halter und die Formpresselemente bevorzugt.

Neben der bevorzugten Kurvensteuerung kann der Halter beispielsweise auch druckgesteuert werden. Dabei misst ein Sensor den Druck auf den Halter. Sobald das zweite Formpresselement das Pellet berührt und somit der Druck auf dem Halter zunimmt, wird dieser zurückgezogen und gibt das Pellet für den Formpressvorgang frei. Die Steuerung kann auch pneumatisch oder hydraulisch erfolgen.

Die Vorrichtung und somit die Formpresselemente sind insbesondere zum Ausformen von Kunststoffverschlüssen ausgebildet, wie sie für Getränkeflaschen zum Einsatz kommen. Das erste Formpresselement ist vorzugsweise unten angeordnet, dient als sogenannte Matrize und nimmt den Halter auf. Das zweite Formpresselement ist als Stempel ausgebildet und dringt in das erste Formpresselement ein.

Vorzugsweise wird zur Herstellung von formgepressten Produkten ein sogenannter Drehturm verwendet, der eine gesteuert rotierende Arbeitsplattform aufweist, welche mit einer Vielzahl von erfindungsgemässen Vorrichtungen ausgerüstet ist. Jede der angeordneten Vorrichtungen weist eine eigene Steuerung auf, wobei diese mit den Steuerungen der übrigen Vorrichtungen abgestimmt sind. Damit lassen sich hohe Verarbeitungsgeschwindigkeiten bei gleichzeitig hoher Präzision erreichen. Die Steuerung der einzelnen Teile, insbesondere des Halters, der Deponiervorrichtung und der zweiten Formpresselemente erfolgt bevorzugt zeitlich gesteuert. Vorzugsweise ist die Steuerung im Wesentlichen kurvengesteuert, was zu einem optimalen Bewegungsablauf der Produktion führt. Unter kurvengesteuert wird ein zeitlich gesteuerter Bewegungsablauf verstanden, welcher anhand einer vorgegebenen Kurve gesteuert wird. Dabei können die einzelnen Bewegungsabläufe mit einer gemeinsam genutzten Kurve gesteuert werden. Bevorzugt wird jedoch jeder einzelne Bewegungsablauf mit separaten Kurven gesteuert, welche aufeinander abgestimmt sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische, perspektivische Schnittdarstellung eines Formpress- elements mit einem Halter;
- Fig. 2a-c: anhand schematischer Schnitte ein Verfahren zum Ausformen von thermoplastischem Kunststoff;
- Fig. 3: eine Variante des Halters aus Figur 1 und
- Fig.4: eine schematische Darstellung eines erfindungsgemässen seitlich befestigten Halters.

Grundsätzlich sind in den Figuren gleiche Teile mit gleichen Bezugszeichen versehen.

### Wege zur Ausführung der Erfindung

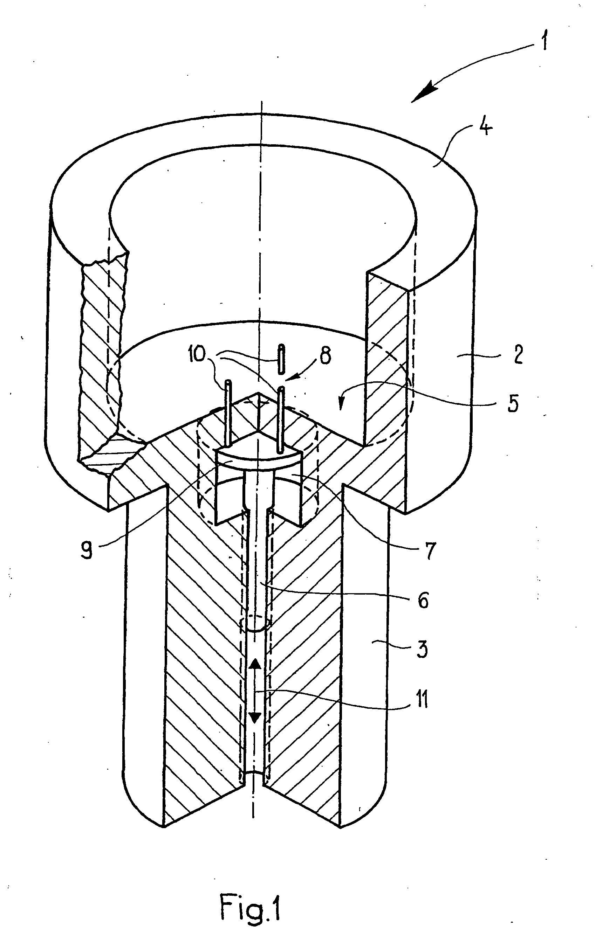

In Figur 1 ist eine schematische, perspektivische Schnittdarstellung eines Formpresselements mit einem Halter gezeigt. Der Halter ist nicht erfindungsgemäss, die dargestellte Vorrichtung und die nachfolgende Beschreibung sind aber hilfreich für das Verständnis der Erfindung. In der dargestellten Vorrichtung ist das erste Formpresswerkzeug 1 unten angeordnet, weshalb das zweite Formpresswerkzeug 14 von oben her in das erste Formpresswerkzeug 1 eindringt. Die Bezeichnungen oben und unten beziehen sich auf die dargestellte Zeichnung. Das erste Formpresswerkzeug 1 könnte auch oben angeordnet sein, was ein Eindringen des zweiten Formpresswerkzeugs 14 von unten her in das erste Formpresswerkzeug 1 bedingen würde.

Das erste Formpresswerkzeug 1 besteht aus einer Matrize 2 und einem Sockel 3. Die Matrize 2 ist ein Hohlzylinder 4 mit einem Boden 5. Die Matrize 2 ist die Negativform, welche die Aussengestaltung des Kunststoffverschlusses 16 bestimmt. Die Dicke des Bodens 5 der Matrize 2 ist annähernd gleich stark wie die Wandstärke des Hohlzylinders 4 ausgebildet. Vorzugsweise ist der Sockel 3 monolithisch mit der Matrize 2 verbunden. In der dargestellten Vorrichtung ist der Sockel 3 als Zylinder ausgebildet. Die Dimensionen sind von dem herzustellenden Produkt und den damit verbundenen Belastungen abhängig.

Im Sockel 3 ist in axialer Richtung eine Bohrung angeordnet, in welcher ein Stössel 6 in vertikaler Richtung (siehe Pfeil 11) hin- und herbewegt werden kann. Vorzugsweise wird eine Gleitschicht vorgesehen, beispielsweise eine Teflonbeschichtung, um die Reibung des Stössels 6 mit dem Sockel 3 weitgehend zu eliminieren. Bei der imaginären Trennlinie zwischen der Unterkante des Bodens 5 und der Oberkante des Sockels 3 ist eine Ausnehmung 7 angeordnet. Die Grösse dieser Ausnehmung 7 ist von der Ausgestaltung des Halters 8 abhängig. Der Halter 8 besteht einerseits aus einer Grundplatte 9 und drei Stiften 10, welche an der Grundplatte 9 befestigt sind. Die Grundplatte 9 ist mit dem Stössel 6 derart verbunden, dass Hin- und Herbewegungen des Stössels 6 simultan von der Grundplatte 9 nachvollzogen werden. Der Boden 5 weist entsprechend der Dicke und der Anzahl der Stifte 10 ausgebildete Bohrungen auf, damit die Stifte 10 den Boden 5 durchdringen können. Die Anordnung der Stifte 10 als "Dreibein" ist beispielhaft, je nach Anwendung kann die Anzahl von einem bis zu einer entsprechend der Anwendung benötigten Anzahl von Stiften reichen. Wie nachfolgend in der Darstellung des Verfahrens noch detailliert beschrieben wird, wird der Halter in vertikaler Richtung zurück beziehungsweise in dieser Darstellung nach unten gezogen. Da die Ausnehmung 7 den Halter 8 weitgehend aufnehmen muss, beträgt die Höhe der Ausnehmung 7 genau oder etwas mehr als die Dicke der Grundplatte 9 und die Länge der Stifte 10 minus der Dicke des Bodens 5. Weitere Einzelheiten ergeben sich bei der nachfolgenden Ausführung zu einem Teil der einzelnen Verfahrensschritte.

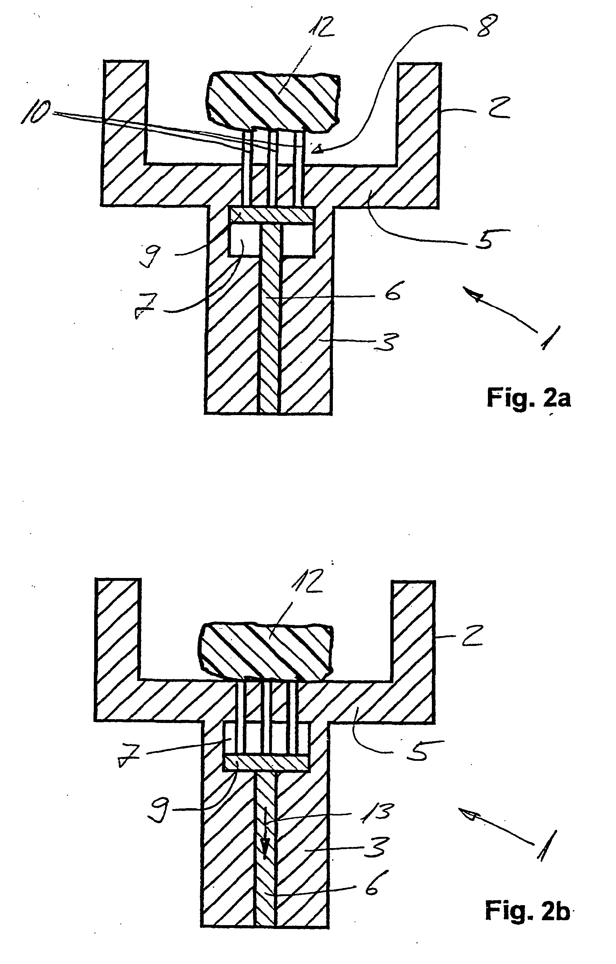

Die Figuren 2a-c zeigen einzelne Schritte eines Verfahrens zum Ausformen von thermoplastischem Kunststoff anhand schematischer Schnitte. Der verwendete Halter ist nicht erfindungsgemäss, die nachfolgende Beschreibung des Verfahrens ist aber hilfreich für das Verständnis der Erfindung.

Figur 2a zeigt die Ausgangsstellung des ersten Formpresswerkzeugs 1, bei welchem der Halter 8 bis zum Anschlag der Grundplatte 9 hochgefahren ist. Das erste Formpresswerkzeug 1 wird mit einem Wasserkreislauf (hier nicht dargestellt) auf etwa 17° Celsius herabgekühlt. Die Stifte 10 des Halters 8 durchdringen die Bohrungen im Boden 5 und stehen über diesem soweit vor, dass ein genügend grosser Abstand von den Auflagepunkten des Halters 8 zum Boden 5 des Formpresselements 1 vorhanden ist. Dadurch wird gewährleistet, dass die auf diesem Halter 8 deponierte Portion extrudierten, thermoplastischen Kunststoffs, nachfolgend das Pellet 12 genannt, sich nicht zu stark abkühlt. Dies, obwohl zwischen dem Pellet 12 und dem ersten Formpresswerkzeug 1 eine grosse Temperaturdifferenz - in diesem Beispiel etwa 160° Celsius- besteht.

Die Aufbereitung des Kunststoffes erfolgt durch eine an sich bekannte Extrudiervorrichtung. Sobald sich ein Halter 8 unter einer Extruderöffnung befindet, wird ein Pellet 12 an dieser, in den Arbeitsbereich des Drehturms hineinreichenden Extrudiervorrichtung abgeschnitten und auf den Stiften 10 des Halters 8 abgesetzt, beziehungsweise deponiert. Jede Öffnung der Extrudiervorrichtung ist gesteuert zu öffnen und zu schliessen. Der Arbeitsvorgang vom Deponieren bis zum eigentlichen Verpressen dauert rund zwei Sekunden. Da das Pellet 12 nur eine geringe Kontaktfläche mit dem doch wesentlich kälteren Halter 8 aufweist und die Verweildauer des Pellets 12 auf diesem relativ kurz ist, findet keine starke Abkühlung des Pellets 12 statt und seine Temperatur, welche bei etwa 180° Celsius liegt, bleibt bis zur eigentlichen Formpressung weitgehend erhalten.

Anschliessend wird der Stössel 6, bis die Unterkante der Grundplatte 9 am Boden der Ausnehmung 7 anstösst, in der bevorzugten Ausführungsform zurückgezogen (siehe Pfeil 13) beziehungsweise in dieser Darstellung nach unten gefahren. Der Zustand des vollkommen zurückgezogenen Halters 8 ist in der Figur 2b gezeigt. Da die Höhe der Ausnehmung 7 derart gross ist, dass die Oberkante der Stifte 10 auf oder unter der Oberkante des Bodens 5 zu liegen kommt, liegt das Pellet 12 nun ganz auf dem Boden 5 der Matrize 2 auf.

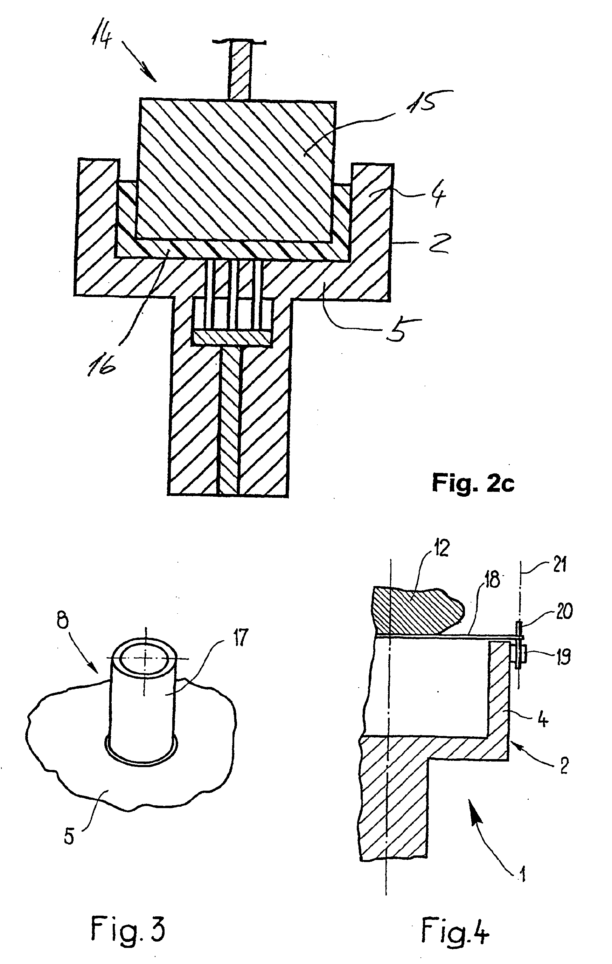

Innerhalb von Sekundenbruchteilen nachdem das Pellet 12 den Boden 5 berührt hat, erfolgt die Formpressung, wie in Figur 2c dargestellt ist. Die Zeit, während der das Pellet auf dem Boden des Werkzeugs aufliegt, beträgt also beispielsweise nur 1/5 oder weniger der Zeit, die das Pellet vom Deponieren bis zum effektiven (nachfolgend beschriebenen) Verpressen innerhalb des Frompresswerkzeugs ist. Dazu dringt das zweite Formpresswerkzeug 14, welches mit einem Wasserkreislauf (hier nicht dargestellt) auf eine Temperatur von etwa 50° Celsius vorgewärmt wurde, in das erste, gekühlte Formpresswerkzeug 1 ein. Der Stempel 15 des zweiten Formpresswerkzeugs 14 gestaltet die Innenform, welche beispielsweise der Kunststoffverschluss 16 aufweisen soll.

Bei den Temperaturangaben handelt es sich um ein Ausführungsbeispiel der Herstellung. Die Temperaturen, insbesondere der Formpresswerkzeuge 1 und 14 können je nach Anforderungen und Arbeitsablauf angepasst werden, ohne dass dies zu einer Lösung führt, welche ausserhalb dem Bereich der Erfindung liegt.

Die beiden Formpresswerkzeuge 1 und 14 verbleiben eine bis zwei Sekunden in der Formpress-Stellung und kühlen den geformten Kunststoffverschluss 16 ab. Anschliessend wird das erste Formpresswerkzeug 1 abgesenkt und vorzugsweise das zweite Formpresswerkzeug nach oben gezogen. Der Kunststoffverschluss 16 bleibt am Stempel 15 des zweiten Formpresswerkzeugs 14 haften. Mit einer Hülse (hier nicht dargestellt), welche entlang des Stempels 15 nach unten gleitet, wird der Kunststoffverschluss 16 abgestreift.

Das beschriebene Verfahren wird vorzugsweise an einem Drehturm (hier nicht dargestellt) ausgeführt. Dazu weist der Drehturm eine gesteuerte Arbeitsplattform auf, welche mit einer Vielzahl der erfindungsgemässen Vorrichtungen versehen ist. Sämtliche Bewegungen erfolgen gesteuert, wobei kurvengesteuerte Bewegungen bevorzugt sind. Die Kurvenbahnen sind so ausgeführt, dass beispielsweise folgende Bewegungsabläufe resultieren:
- der Halter 8 befindet sich bei der Aufnahme des Pellets 12 in der maximal ausgefahrenen Stellung. Sobald der eigentliche Formpressvorgang beginnt, wird der Halter 8 im ersten Formpresswerkzeug 1 zurückgezogen. Sobald das zweite Formpresswerkzeug 14 zurückgezogen wird, wird auch der Halter 8 wieder in seine Ausgangsposition gebracht. Einerseits wird der Weg der Bewegungen durch die Kurvenbahn bestimmt, andererseits kann der Halter 8 nicht weiter als bis zum Anschlag an der Unterkante des Bodens 5 beziehungsweise bis zur unteren Kante der Ausnehmung 7 bewegt werden.
- das erste Formpresswerkzeug 1 verbleibt grundsätzlich in seiner Stellung. Einzig zur Unterstützung der Freigabe des geformten Kunststoffverschlusses 16 wird das erste Formpresswerkzeug 1 am Ende des Formpressvorgangs beispielsweise leicht abgesenkt. Vorzugsweise erfolgt das Anheben des Halters 8 zur gleichen Zeit, wenn das erste Formpresswerkzeug 1 wieder in seine Ausgangsstellung gebracht wird.
- das zweite Formpresswerkzeug 14 wird sobald als möglich nach der Deponierung des Pellets 12 abgesenkt. Eine leichte Verzögerung kann eingebaut werden, wenn infolge einer ungenauen Deponierung des Pellet 12 dieses sich zuerst noch auf dem Halter 8 zentrieren muss. Sobald sich das zweite Formpresswerkzeug senkt, wird auch der Halter 8 zurückgezogen. Nach Abschluss der Formpressung wird das zweite Formpresswerkzeug 14 zurückgezogen beziehungsweise in dieser Darstellung nach oben gezogen, während der fertig ausgestaltete Kunststoffverschluss 16 noch am Stempel 15 haftet.
- befindet sich das zweite Formpresswerkzeug 14 an seiner oberen Anschlagstellung, wird eine Hülse nach unten gefahren, welche entlang dem Stempel 15 entlangstreift und den Kunststoffverschluss 16 von dem Stempel 15 löst.

Die beschriebenen Vorgänge müssen aufeinander abgestimmt werden. Sie können eine volle Drehung - 360° - des Drehturms dauern. Werden jedoch zwei Extruderöffnungen beispielsweise entgegengesetzt angeordnet, so können diese Vorgänge auf eine Drehung des Drehturms von 180° beschränkt werden. Entsprechend dieser Überlegungen kann der benötigte Drehwinkel des Drehturms zum Abschluss eines gesamten Herstellungsvorgangs angepasst werden.

Eine ebenfalls nicht erfindungsgemässe Variante des Halters 8 ist in Figur 3 gezeigt. Anstelle der Ausgestaltung des Halters 8 mit mehreren Auflagepunkten, wie beispielsweise mit drei Stiften, ist ein Rohr 17 angeordnet. Wie bei der Lösung mit mehreren Auflagepunkten wird das Pellet auf dem Rohr 17 deponiert und dieses wird entsprechend den vorangehenden Ausführungen zurückgezogen, beziehungsweise im ersten Formpresswerkzeug versenkt. Die Rohrwandung des Rohres 17 wird vorzugsweise so dünn wie möglich ausgebildet, damit die Kontaktfläche zwischen dem Rohr 17 und dem Pellet so klein wie möglich gehalten wird. Die übrige Konstruktion des Halters 8 entspricht weitgehend den vorher gemachten Ausführungen.

Fig. 4 zeigt eine schematische Darstellung eines seitlich befestigten erfindungsgemässen Halters 18. Dazu weist beispielsweise das erste Formpresselement 1 an der Matrize 2 und dort, vorzugsweise am Hohlzylinder 4, eine Halterung 19 auf. An dieser Halterung 19 wird der Halter 18 beispielsweise mit einem Bolzen 20 drehbar befestigt. Der Halter 18 wird vorzugsweise in der horizontalen Ebene zweiteilig ausgebildet. Der Halter 18 kann sich so scheren- beziehungsweise zangenförmig öffnen und das Pellet 12 auf eine einfache Art für den Formpressvorgang freigeben. Damit der Halter 18 beim Formpressvorgang nicht im Weg ist, wird er beispielsweise um die Drehachse 21, welche durch den Bolzen 20 gebildet wird, zur Seite abgedreht. Nachdem das zweite Formpresswerkzeug zurückgezogen wurde, wird der Halter 18 wieder zurückgeschwenkt. Die Konstruktion kann auch dahingehend abgeändert werden, dass der Halter 18, bezogen auf diese Darstellung, nach rechts aus dem Aktionsbereich des zweiten Formpresswerkzeugs gezogen wird.

Es ist klar, dass sich die beschriebenen Ausführungsbeispiele in verschiedenen Aspekten modifizieren lassen. Insbesondere ist hervorzuheben, dass das erste Formpresswerkzeug mit dem Halter auch oben, bezogen auf die Darstellung, angeordnet sein kann. Dazu muss das Pellet jedoch solange an dem Halter haften, bis das zweite Formpresswerkzeug in der Position ist, dass das Pellet nicht neben diesem zweiten Formpresswerkzeug fallen kann. Dazu ist der Halter in Form einer kleinen Zange ausgebildet. Dazu können beispielsweise die Stifte an ihrem in das Formpresswerkzeug hineinreichende Ende Abbiegungen aufweisen, welche das Pellet befristet halten, ähnlich einer Greifvorrichtung. Während dem Formpressvorgang zieht sich der Halter in das erste Formpresswerkzeug zurück und gibt das Pellet frei, wenn dieses nicht mehr neben das zweite Formpresswerkzeug fallen kann. Treten weiterhin sogenannte "Verglasungs"-Effekte an dem fertigen Produkt auf, beispielsweise an einem Kunststoffverschluss für Getränkeflaschen, können die Temperaturen beispielsweise des Halters und/oder vorzugsweise der Formpresswerkzeuge angepasst werden. Dafür werden die Vorlauftemperaturen der Wasserkreisläufe, welche die Formpresswerkzeuge erwärmen, beziehungsweise kühlen angepasst. Damit lässt sich die Temperaturdifferenz zwischen dem Pellet und dem Halter beziehungsweise insbesondere dem ersten Formpresswerkzeug senken, so dass die Möglichkeit eines "Verglasungs"-Effekts an dem fertigen Produkt weiter reduziert wird.

Zusammenfassend ist festzustellen, dass durch das erfindungsgemässe Verfahren und der erfindungsgemässen Vorrichtung insbesondere Kunststoffverschlüsse geschaffen werden, welche keine oder nur eine geringe unkontrollierte Oberflächenstruktur aufweisen, ohne dass die Produktion solcher Kunststoffverschlüsse verlangsamt wird.

## Patentansprüche

1. Verfahren zum Ausformen von thermoplastischem Kunststoff zwischen einem ersten (1) und einem zweiten Formpresselement (14), wobei eine Portion (12) Rohmasse auf einem Halter (18) geringer Auflagefläche in einem Abstand zu einem Formpresselement (1) deponiert wird und erst unmittelbar vor dem beziehungsweise zu Beginn des Pressens an die Formpresselemente (1 bzw. 14) abgegeben wird, **dadurch gekennzeichnet, dass** der Halter (18) zangenförmig ausgebildet und an einer Seitenwand eines der Formpresselemente (1 bzw. 14) angeordnet ist.

2. Verfahren nach Anspruch 1, **dadurch gekennzeichnet, dass** der Halter (18) zum Freigeben der Portion scheren- bzw. zangenförmig geöffnet wird.

3. Verfahren nach Anspruch 1 oder 2, **dadurch gekennzeichnet, dass** der Halter (18) nach Freigeben der Portion um eine Drehachse (21) zur Seite abgedreht und nach einem Ende des Pressens wieder zurückgeschwenkt wird.

4. Verfahren nach einem der Ansprüche 1 bis 3, **dadurch gekennzeichnet, dass** die Portion (12) durch den Halter (18) zentriert wird.

5. Verfahren nach einem der Ansprüche 1 bis 4, **dadurch gekennzeichnet, dass** der Halter (8; 18) gesteuert bewegt wird.

6. Vorrichtung zum Ausformen von thermoplastischem Kunststoff mit einem ersten (1) und einem zweiten Formpresselement (14), zwischen welchen eine Portion (12) thermoplastischen Kunststoff verpresst wird, mit einem Halter (18) geringer Auflagefläche zum vorübergehenden Abstützen der Portion (12) vor dem Kontakt mit den Formpresselementen (1 und 14), **dadurch gekennzeichnet, dass** der Halter (18) zangenförmig ausgebildet und an einer Seitenwand eines der Formpresselemente (1 bzw. 14) angeordnet ist.

7. Vorrichtung nach Anspruch 6, **dadurch gekennzeichnet, dass** der Halter (18) zum Freigeben der Portion scheren- bzw. zangenförmig öffenbar ist.

8. Vorrichtung nach Anspruch 6 oder 7, **dadurch gekennzeichnet, dass** der Halter (18) seitlich an einem der Formpresselemente an einer Halterung (19) befestigt ist.

9. Vorrichtung nach Anspruch 8, **dadurch gekennzeichnet, dass** die Halterung (19) eine Drehachse (21) aufweist, um welche der Halter (18) drehbar befestigt ist.

10. Vorrichtung nach einem der Ansprüche 6 bis 9, **dadurch gekennzeichnet, dass** die Formpresselemente (1 und 14) zum Ausformen von Kunststoffverschlüssen (16) ausgebildet sind, wobei das als Matrize (2) ausgebildete Formpresselement (1) unten angeordnet ist und den Halter (18) aufnimmt.

11. Vorrichtung nach einem der Ansprüche 6 bis 10, **dadurch gekennzeichnet, dass** Mittel zum zeitlich gesteuerten Bewegen des Halters (18) vorgesehen sind.

12. Drehturm mit mehreren Vorrichtungen nach einem der Ansprüche 6 bis 11.

13. Drehturm nach Anspruch 12, **dadurch gekennzeichnet, dass** die Formpresselemente kurvengesteuert sind.

## Claims

1. A method of shaping thermoplastic plastics material between a first (1) and a second compression moulding element (14), wherein a portion (12) of raw material is deposited on a holder (18) having a small support surface at a spacing from one compression moulding element (1) and not delivered to the compression moulding elements (1 and 14, respectively) until directly before moulding or when moulding commences, **characterised in that** the holder (18) is pincer-shaped and located at a side wall of one of the moulding elements (1 and 14, respectively).

2. Method according to Claim 1, **characterised in that** the holder (18) is opened scissor-respectively pincer-like to release the portion.

3. Method according to either of Claims 1 or 2, **characterised in that** the holder (18) is rotated sideways around a rotation axis (21) after releasing the portion and is rotated back again after the moulding is finished.

4. Method according to any one of Claims 1 to 3, **characterised in that** the portion (12) is centred by the holder (18).

5. Method according to any one of Claims 1 to 4, **characterised in that** the holder (18) is moved in a controlled fashion.

6. Device for shaping thermoplastic plastics material, with a first (1) and a second compression moulding element (14), between which elements a portion (12) of thermoplastic plastics material is moulded, wherein a holder (18) having a small support surface is provided for temporarily supporting the portion (12) prior to contact with the compression moulding elements (1 and 14), **characterised in that** the holder (18) is pincer-shaped and located at a side wall of one of the moulding elements (1 and 14, respectively).

7. Device according to Claim 6, **characterised in that** the holder (18) can be opened scissor-respectively pincer-like to release the portion.

8. Device according to either of Claims 6 or 7, **characterised in that** the holder (18) is attached to a mount (19) located at a side of the compression moulding elements.

9. Device according to Claim 8, **characterised in that** mount (19) features a rotation axis (21), whereby the holder (18) is pivotally mounted about the rotation axis (21).

10. Device according to any one of Claims 6 to 9, **characterised in that** the compression moulding elements (1 and 14) are formed for shaping plastics closures (16), wherein the compression moulding element (1), which is formed as a female mould (2), is disposed at the bottom and accommodates the holder (18).

11. Device according to any one of Claims 6 to 10, **characterised in that** means are provided for moving the holder (18) in a time-controlled fashion.

12. Revolving turret with a plurality of devices according to any one of Claims 6 to 11.

13. Revolving turret according to Claim 12, **characterised in that** the compression moulding elements are cam-controlled.

## Revendications

1. Procédé de formage de plastique thermoplastique entre un premier (1) et un deuxième élément de presse de formage (14), une portion (12) de masse brute étant déposée sur un support (18) de faible surface d'appui à distance d'un élément de presse de formage (1), et étant d'abord transféré directement, avant ou au début du pressage, aux éléments de presse de formage (1, respectivement 14), **caractérisé en ce que** le support (18) est réalisé en forme de pince et est disposé sur une paroi latérale de l'un des éléments de presse de formage (1, respectivement 14).

2. Procédé selon la revendication 1, **caractérisé en ce que** le support (18) est ouvert en forme de cisaille ou de pince pour libérer la portion.

3. Procédé selon la revendication 1 ou 2, **caractérisé en ce que** le support (18), après la libération de la portion, est tourné vers le côté autour d'un axe de rotation (21) et est à nouveau pivoté vers l'arrière à la fin du pressage.

4. Procédé selon l'une quelconque des revendications 1 à 3, **caractérisé en ce que** la portion (12) est centrée par le support (18).

5. Procédé selon l'une quelconque des revendications 1 à 4, **caractérisé en ce que** le support (18) est déplacé de manière commandée.

6. Dispositif de formage de plastique thermoplastique comprenant un premier (1) et un deuxième élément de presse de formage (14), entre lesquels une portion (12) de plastique thermoplastique est pressée, comprenant un support (18) de faible surface d'appui pour le support temporaire de la portion (12) avant le contact avec les éléments de presse de formage (1 et 14), **caractérisé en ce que** le support (18) est réalisé en forme de pince et est disposé sur une paroi latérale de l'un des éléments de presse de formage (1, respectivement 14).

7. Dispositif selon la revendication 6, **caractérisé en ce que** le support (18) peut être ouvert en forme de cisaille ou de pince pour libérer la portion.

8. Dispositif selon la revendication 6 ou 7, **caractérisé en ce que** le support (18) est fixé latéralement à l'un des éléments de presse de formage sur une fixation (19).

9. Dispositif selon la revendication 8, **caractérisé en ce que** la fixation (19) présente un axe de rotation (21) autour duquel le support (18) est fixé de manière rotative.

10. Dispositif selon l'une quelconque des revendications 6 à 9, **caractérisé en ce que** les éléments de presse de formage (1 et 14) sont réalisés pour former des fermetures en plastique (16), l'élément de presse de formage (1) réalisé sous forme de matrice (2) étant disposé en bas et recevant le support (18).

11. Dispositif selon l'une quelconque des revendications 6 à 10, **caractérisé en ce que** des moyens pour déplacer le support (18) de manière commandée dans le temps sont prévus.

12. Tourelle rotative comprenant plusieurs dispositifs selon l'une quelconque des revendications 6 à 11.

13. Tourelle rotative selon la revendication 12, **caractérisée en ce que** les éléments de presse de formage sont commandés par came.
